# EUROPÄISCHE PATENTSCHRIFT

(11) **EP 3 539 856 B1**
(45) Veröffentlichungstag und Bekanntmachung des Hinweises auf die Patenterteilung: **16.12.2020**
(21) Anmeldenummer: 19161122.7
(22) Anmeldetag: 06.03.2019
(51) Int. Cl.: B62L 1/00, B62K 19/30, B62K 25/02

(54) **AUFNAHMEEINRICHTUNG FÜR EINE FAHRRAD-HINTERRADACHSE**
HOLDING DEVICE FOR A BICYCLE REAR AXLE
DISPOSITIF DE LOGEMENT POUR UN ESSIEU DE ROUE ARRIÈRE DE BICYCLETTE

(30) Priorität: 14.03.2018 DE 202018001350 U
(43) Veröffentlichungstag der Anmeldung: 18.09.2019
(73) Patentinhaber: Canyon Bicycles GmbH, 56073 Koblenz (DE)
(72) Erfinder: HENSOLT, Matthias, 56076 Koblenz (DE); DELIC, Fedja, 56072 Koblenz (DE)
(74) Vertreter: dompatent von Kreisler Selting Werner - Partnerschaft von Patent- und Rechtsanwälten mbB

(56) Entgegenhaltungen:
- EP-A2- 0 244 885
- DE-A1-102009 038 485
- DE-A1-102016 003 102
- DE-U1-202009 015 815

## Beschreibung

Die Erfindung betrifft eine Aufnahmeeinrichtung für eine Fahrrad-Hinterradachse.

Zur Kraftübertragung sind bei Fahrrädern Ketten oder Riemen vorgesehen. Sofern ein Fahrrad keine Kettenschaltung, sondern beispielsweise eine Nabenschaltung oder keine Schaltung aufweist, kann die Kette nicht über einen Kettenspanner oder dergleichen gespannt werden. Um bei derartigen Fahrrädern ein Spannen der Kette oder des Riemens zu ermöglichen, ist es bekannt, die Hinterradachse derart mit den Ausfallenden des Fahrradrahmens zu verbinden, dass die Hinterradachse verschoben werden kann. Hierzu sind an den Ausfallenden Schlitze vorgesehen, sodass ein Verschieben der Hinterradachse derart möglich ist, dass sich durch das Verschieben der Abstand zwischen der Tretkurbel und der Hinterradachse zum Spannen der Kette oder des Riemens verändert.

Des Weiteren ist es zum Spannen einer Kette oder eines Riemens bekannt, das Tretlager exzentrisch im Tretlagergehäuse anzuordnen. Durch entsprechendes Drehen des Tretlagers im Tretlagergehäuse kann somit wiederrum der Abstand zwischen der Tretkurbel und der Hinterradachse zum Spannen der Kette oder des Riemens verändert werden.

Das Verschieben der Hinterradachse in schlitzförmigen Ausnehmungen der Ausfallenden ist hinsichtlich der exakten Justage schwierig. So tritt beispielsweise häufig eine geringe Schrägstellung des Hinterrades auf. Dies ist insbesondere beim Vorsehen von Scheibenbremsen nachteilig. Exzentrisch im Tretlagergehäuse angeordnete Tretlager lassen zwar eine exaktere Justage zu, sind jedoch technisch aufwendig. Ferner ist das Einstellen schwierig.

Aus DE 10 2016 003 102 ist eine Aufnahmevorrichtung für eine Fahrrad-Hinterradachse mit den Merkmalen des Oberbegriffs des Anspruchs 1 bekannt.

Aufgabe der Erfindung ist es eine Aufnahmeeinrichtung für eine Fahrrad-Hinterradachse zu schaffen, mit der auf einfache Weise ein Spannen eines Riemens oder einer Kette möglich ist.

Die Lösung der Aufgabe erfolgt erfindungsgemäß durch die Merkmale des Anspruchs 1.

Die erfindungsgemäße Aufnahmeeinrichtung für eine Fahrrad-Hinterradachse weist zwei Kettenstrebenelemente auf. Die beiden Kettenstrebenelemente sind jeweils mit einer Kettenstrebe eines Fahrradrahmens vorzugsweise nicht lösbar verbunden. Auch kann eine einstückige Ausgestaltung der Kettenstrebenelemente mit den Kettenstreben erfolgen. Ferner ist je Kettenstrebenelement ein Achsaufnahmeelement vorgesehen. Das Achsaufnahmeelement dient zur Aufnahme der Hinterradachse. Hierzu weist das Achsaufnahmeelement eine Ausnehmung auf. Diese kann als offener Schlitz oder als Bohrung beim Vorsehen einer Steckachse ausgebildet sein. Das Achsaufnahmeelement ist erfindungsgemäß gegenüber dem jeweiligen Kettenstrebenelement verschiebbar. Durch Verschieben der beiden Achsaufnahmeelemente relativ zu den beiden Kettenstrebenelementen kann somit ein Spannen einer Kette oder eines Riemens erfolgen, da durch Verschieben der Achsaufnahmeelemente ein Abstand zwischen der Hinterradachse bzw. der die Hinterradachse aufnehmenden Ausnehmung und einer Tretkurbel veränderbar ist. Ferner ist jeweils mindestens ein Fixierelement zum Fixieren des Achsaufnahmeelements in unterschiedlichen Positionen an dem zugehörigen Kettenstrebenelement vorgesehen. Vorzugsweise ist hierbei eine stufenfreie Verschiebung und Fixierung des Achsaufnahmeelements möglich, sodass eine exakte Einstellung der Ketten- bzw. Riemenspannung möglich ist.

Erfindungsgemäß weisen die Fixierelemente jeweils ein Klemmmittel, wie insbesondere eine Schraube auf. Die Klemmmittel sind hierbei an einer Unterseite des Achsaufnahmeelements und/oder des Kettenstrebenelements angeordnet. Die Unterseite ist hierbei diejenige im montierten Zustand, bei stehendem Fahrrad nach unten weisende Seite. Durch eine derartige Anordnung der Klemmmittel, sind diese einerseits von unten zum Lösen und Fixieren gut zugänglich, andererseits von außen bzw. an einer Außenseite der Aufnahmeeinrichtung nicht sichtbar. Insofern ist es möglich, diesen Bereich der Aufnahmeeinrichtung unabhängig von den Klemmmitteln designerisch zu gestalten. Des Weiteren kann durch das Vorsehen der Klemmmittel an der Unterseite, die auf einfache Weise zur Fixierung erforderliche Klemmkraft aufgebracht werden, wobei es möglich ist, dass die Aufnahmeeinrichtungen quer zu ihrer Längsrichtung, d.h. quer zur Fahrtrichtung in montiertem Zustand eine geringe Breite aufweisen. Dies ist möglich, da zur Aufnahme der Klemmmittel und andere Bauteile der Fixierelemente der erforderliche Bauraum im Wesentlichen in vertikaler Richtung vorgesehen ist und insofern die horizontalen Abmessungen der Aufnahmeeinrichtungen gering sind.

Die Klemmmittel, bei denen es sich insbesondere um Schrauben handelt, sind vorzugsweise jeweils in einer Öffnung des jeweiligen Achsaufnahmeelements angeordnet. Die Öffnung ist insbesondere als Längsschlitz ausgebildet, sodass die Achsaufnahmeelemente relativ zu den Klemmmitteln in Richtung der Längsausnehmung und des jeweiligen Längsschlitzes verschoben werden können. Die Klemmmittel sind hierbei durch die insbesondere als Längsschlitz ausgebildeten Öffnungen geführt und in besonders bevorzugter Ausführungsform im Kettenstrebenelement gehalten. Erfindungsgemäß weist das Kettenstrebenelement Aufnahmeansätze auf. Die Aufnahmeansätze bilden hierbei einen Teil des Fixierelements, der insbesondere dazu geeignet ist, das jeweilige Klemmmittel zu halten. Hierzu kann der entsprechende Aufnahmeansatz eine Gewindebohrung aufweisen, in der das als Schraube ausgebildete Klemmmittel gehalten wird.

Die Aufnahmeansätze ragen vorzugsweise in eine Ausnehmung der entsprechenden Achsaufnahmeelemente die jeweils an einem Kettenstrebenelement vorgesehen sind. Vorzugsweise sind je Kettenstrebenelemente zwei Aufnahmeansätze angeordnet, die in eine gemeinsame oder zwei gesonderte Ausnehmungen ragen.

Vorzugsweise weisen die Ausnehmungen in eine Verschieberichtung eine größere Abmessung als der entsprechende Aufnahmeansatz auf. Hierdurch ist eine Verschiebung der entsprechenden Achsaufnahmeelemente relativ zu den Kettenstrebenelementen möglich. Die Verschieberichtung ist hierbei diejenige Richtung, durch die ein Verändern des Abstandes zwischen der Hinterradachse und der Tretkurbel möglich ist. Besonders bevorzugt ist es, dass die Verschieberichtung in Längsrichtung bzw. in Fahrtrichtung verläuft, wobei auch eine geringe Abweichung hiervon möglich ist.

Des Weiteren ist es bevorzugt, dass die Ausnehmungen senkrecht zur Verschieberichtung im Wesentlichen dieselbe Abmessung wie die Ansätze aufweisen. Hierdurch ist eine gute Führung der Aufnahmeansätze in den Ausnehmungen realisiert. Die Aufnahmeansätze sind in dieser Richtung allenfalls geringfügig schmaler als die Ausnehmungen, um eine gute Montage zu ermöglichen und ein Klemmen beim Verschieben zu vermeiden.

Besonders bevorzugt ist es, dass je Achsaufnahmeelement zwei Fixierelemente vorgesehen sind. Insbesondere weist insofern das Kettenstrebenelement in bevorzugter Ausführungsform zwei Aufnahmeansätze auf, die sodann mit zwei Klemmmitteln zusammen wirken.

An Stelle der vorstehend beschriebenen, insbesondere bevorzugten Ausführungsformen ist es auch möglich, dass die entsprechenden Bauteile umgekehrt angeordnet sind, sodass die vorstehend anhand der Achsaufnahmeelemente beschriebenen Bauteile an dem Kettenstrebenelementen vorgesehen sind und umgekehrt. Insbesondere können die Aufnahmeansätze somit auch an den Achsaufnahmeelementen vorgesehen sein und sodann in entsprechende Ausnehmungen der Kettenstrebenelemente ragen. Entsprechend werden auch die insbesondere als Längsschlitze vorgesehenen Öffnungen sodann in den Kettenstrebenelementen vorgesehen.

In einer bevorzugten Weiterbildung der Erfindung weist eines der beiden Achsaufnahmeelemente eine Halteeinrichtung für einen Bremssattel auf. Die Halteeinrichtung kann hierbei eine oder mehrere ebene Anlageflächen aufweisen, an denen entsprechende korrespondierende Anlageflächen des Bremssattels angeordnet werden. Zur Fixierung sind üblicherweise Schrauben vorgesehen. Das Anordnen des Bremssattels an einem der beiden Achsaufnahmeelemente hat den Vorteil, dass beim Verschieben des Achsaufnahmeelements in dem Kettenstrebenaufnahmeelement die relative Lage zwischen Hinterradachse und Bremse konstant bleibt. Es ist somit kein Nachjustieren einer Hydraulikbremse oder dergleichen erforderlich.

Bei einer weiteren bevorzugten Ausführungsform der Erfindung weisen die Kettenstrebenelemente jeweils eine Sattelstrebenaufnahme auf. Mit der Sattelstrebenaufnahme kann jeweils eine Sattelstrebe des Fahrradrahmens verbunden werden. Ebenso ist es möglich, dass entsprechend der Kettenstreben auch die Sattelstreben einstückig mit dem Kettenstrebenelement ausgebildet sind, oder fest mit diesem verbunden sind.

Bei einer besonders bevorzugten Weiterbildung der Erfindung weist eines der beiden Kettenstrebenelemente einen Riemenschlitz auf. Dieser ist dadurch ausgebildet, dass bei diesem Kettenstrebenelement die Sattelstrebenaufnahme lösbar verbunden ist. Zur Montage des Riemens oder einer Endloskette ist es daher möglich, diesen durch den Riemenschlitz hindurch zu führen. Dies ist insbesondere bei Riemen erforderlich, da es sich um Endlos-Riemen handelt, die nicht geöffnet werden können. Andererseits verläuft die Kettenstrebe durch die von dem Riemen gebildete Riemenschlaufe. Nach der Montage des Riemens kann der Riemenschlitz wieder verschlossen bzw. das Sattelaufnahmeelement wieder fest am Kettenstrebenelement vorgesehen werden. Hierzu ist insbesondere ein Halteelement, wie eine Schraube vorgesehen. In besonders bevorzugter Weiterbildung ist in dem Kettenschlitz ein Distanzelement angeordnet. Dies kann bei gelöstem Halteelement herausgenommen werden. Hierdurch ist es insbesondere nicht erforderlich, beim Durchführen des Riemenschlitzes die Kettenstrebenaufnahme zu verformen, um den Schlitz auszubilden.

Zur Justage der Achsaufnahmeelemente relativ zu den Kettenstrebenelemente, d.h. zum Spannen des Riemens oder der Kette ist es ferner bevorzugt, Spannelemente vorzusehen. Derartige Spannelemente sind beispielsweise derart ausgebildet, dass jeweils an dem Kettenstrebenelement oder dem Achsaufnahmeelement ein Ansatz vorgesehen ist, der beispielsweise eine Gewindebohrung aufweist. In dieser kann eine Schraube oder ein anderes von einem Außengewinde versehenes Element vorgesehen sein. Dieses liegt sodann an einer Anlagefläche des jeweils anderen Elements, d.h. des Achsaufnahmeelements oder des Kettenstrebenelements an. Durch Ein- oder Ausschrauben des entsprechenden Elements kann somit eine Justage der relativen Lage von den Kettenstrebenaufnahmeelementen zu dem jeweiligen Achsaufnahmeelenemt realisiert werden.

Des Weiteren betrifft die Erfindung einen Fahrradrahmen. Dieser weist üblicherweise zwei Kettenstreben, sowie auch zwei Sattelstreben auf. Diese sind einstückig mit dem Kettenstrebenaufnahmeelement verbunden bzw. einstückig hergestellt. Je nach Ausgestaltung des Fahrradrahmens weist dieser ein die Sattelstreben mit den Kettenstreben verbindendes Sattelstützrohrs auf, wobei die Verbindung mit den Kettenstreben beispielsweise über ein Tretlagergehäuse erfolgen kann. Zusätzlich kann der Rahmen ein Oberrohr und/oder ein Unterrohr sowie ein Gabelrohr aufweisen.

Nachfolgend wird die Erfindung anhand einer bevorzugten Ausführungsform unter Bezugnahme auf die anliegenden Zeichnungen näher erläutert.

Es zeigen:
- Figur 1: eine schematische perspektivische Ansicht einer Aufnahmeeinrichtung von schräg oben,
- Figur 2: eine schematische perspektivische Ansicht eines der Aufnahmeelemente von schräg unten und

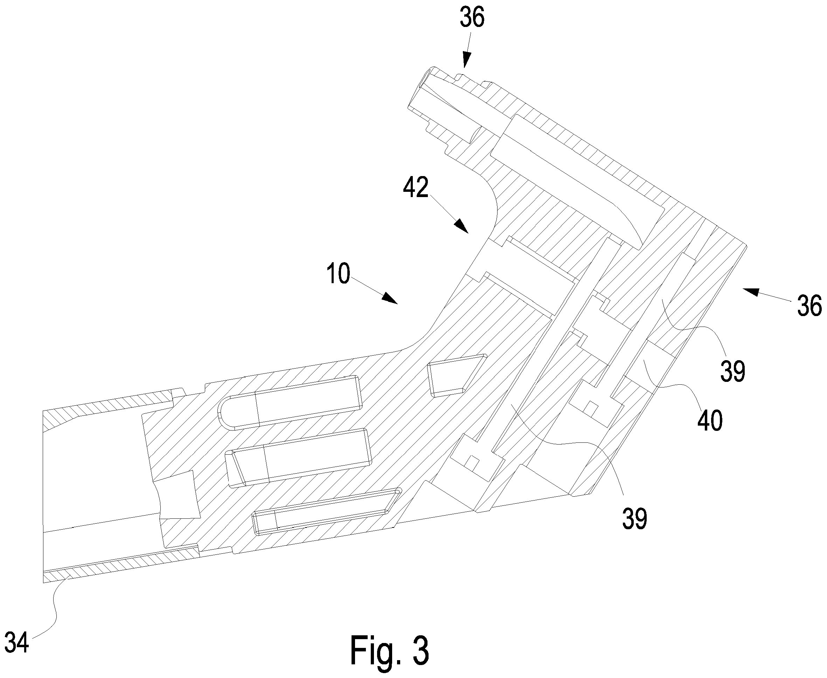

- Figur 3: eine schematische Schnittansicht eines Kettenstrebenelements.

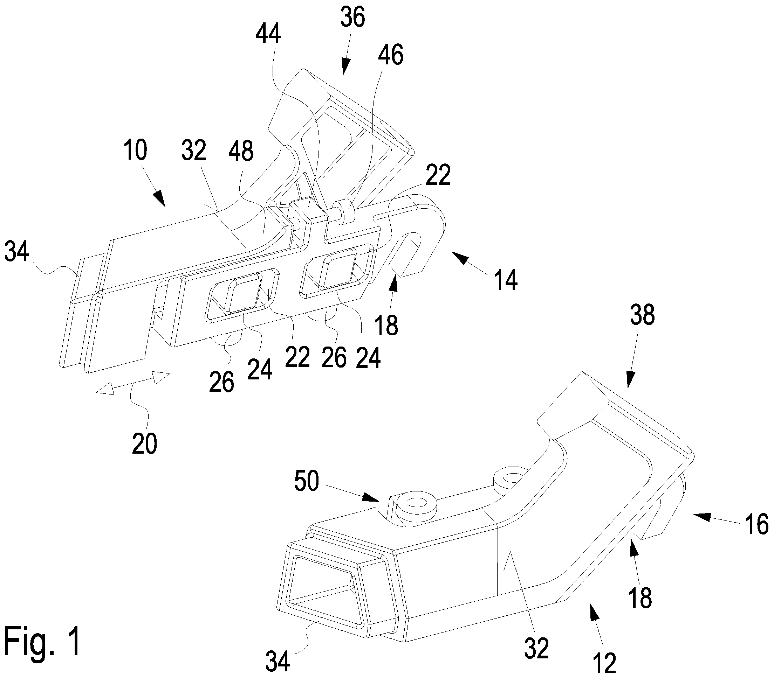

Figur 1 zeigt schematisch eine dreidimensionale Ansicht einer erfindungsgemäßen Aufnahmeeinrichtung von schräg oben, wobei keine Rahmenelemente des Fahrradrahmens insbesondere weder die Kettenstreben noch die Sattelstreben dargestellt sind. Die Aufnahmeeinrichtung umfasst zwei Kettenstrebenelemente 10, 12, wobei es sich bei dem Kettenstrebenelement 10 um das in Fahrtrichtung rechte und bei dem Kettenstrebenelement 12 um das in Fahrtrichtung linke Kettenstrebenelement handelt. Mit beiden Kettenstrebenelementen 10, 12 ist jeweils ein Achsaufnahmeelement 14, 16 verbunden. Die beiden Achsaufnahmeelemente 14, 16 weisen jeweils eine im dargestellten Ausführungsbeispiel als offener Schlitz dargestellte Ausnehmung 18 zur Aufnahme einer Hinterradachse auf. Zum Spannen eines ebenfalls nicht dargestellten Riemens ist die Hinterradachse in eine Längsrichtung (Pfeil 20) verschiebbar. Die Verschiebung ist dadurch ermöglicht, dass die beiden Achsaufnahmeelemente jeweils zwei Ausnehmungen 22 aufweisen, in die jeweils ein Aufnahmeansatz 24 ragt. Die beiden Aufnahmeansätze 24 sind mit dem jeweiligen Kettenstrebenelement 10 bzw. 12 verbunden.

Da die Abmessung der Ausnehmungen 22 in Längsrichtung 20 größer ist als die Breite der Aufnahmeansätze 24 in Längsrichtung 20, können die Achsaufnahmeelemente 14, 16 in Richtung des Pfeils 20 relativ zu den Kettenstrebenelementen 10, 12 verschoben werden.

Senkrecht zur Längsrichtung 20 weisen die Ausnehmungen 22 nur eine geringfügig größere Breite als die beiden Aufnahmeansätze 24 auf. Hierdurch ist eine gute Führung sichergestellt.

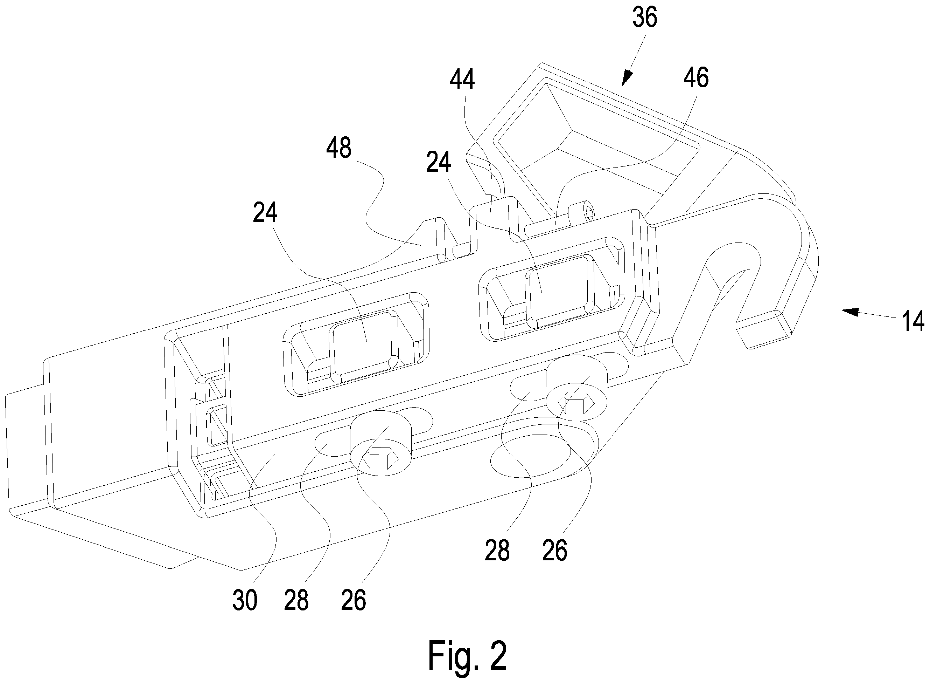

Zusätzlich zu den Aufnahmeansätzen 24 weist ein Fixierelement das zum Fixieren der Achsaufnahmeelemente 14, 16 an den Kettenstrebenelementen 10, 12 dient, Klemmmittel auf, bei denen es sich im dargestellten Ausführungsbeispiel um Schrauben 26 handelt. Die Schrauben 26 sind in Öffnungen 28 (Figur 2) der Achsaufnahmeelemente 14, 16 angeordnet. Die Öffnungen 28 sind jeweils als in Längsrichtung 20 verlaufende Schlitze ausgebildet. Ferner greifen die Schrauben 26 in Gewindebohrungen ein, die in den Aufnahmeansätzen 24 vorgesehen sind. Die Schrauben 26 sind an einer Unterseite 30 der Achsaufnahmeelemente angeordnet. Hier ist einerseits eine gute Zugänglichkeit der Schrauben 26 gewährleistet und andererseits sind die Außenflächen 32 der Kettenstrebenelemente nicht durch Schrauben oder andere Fixierelemente unterbrochen.

Die Kettenstrebenelemente 10, 12 weisen im dargestellten Ausführungsbeispiel jeweils einen Verbindungsansatz 34 zur Verbindung mit Kettenstreben auf.

Ferner weisen die beiden Kettenstrebenelemente 10, 12 jeweils eine Sattelstrebenaufnahme 36, 38 auf. Die Kettenstrebenaufnahme 38 ist hierbei im dargestellten Ausführungsbeispiel einstückig mit dem Kettenstrebenelement 12 verbunden. Die Kettenstrebenaufnahme 36 ist lösbar mit dem Kettenstrebenelement 10 verbunden. Die Verbindung erfolgt über zwei Halteelemente 39, bei denen es sich im dargestellten Ausführungsbeispiel um Schrauben handelt. Zwischen der Sattelstrebenaufnahme 36 und dem Kettenstrebenelement 10 ist ein Distanzelement 40 angeordnet. Das Distanzelement 40 kann durch Lösen der beiden Schrauben 39 entfernt werden. In diesem Zustand ist es sodann möglich, durch den hierdurch entstehenden Riemenschlitz 42 einen Riemen hindurch zu führen. Anschließend wird das Distanzelement 40 wieder in den Riemenschlitz 42 eingesetzt und durch die beiden Schrauben 38 werden sowohl das Kettenstrebenelement 10 mit der Sattelstrebenaufnahme 36 verbunden als auch das Distanzelement 40 fixiert.

Die beiden Achsaufnahmeelemente 14, 16 sind hinsichtlich der Ausnehmungen 22, der Anordnung der Aufnahmeansätze 24 sowie der Anordnung der Schrauben 26 und auch der Öffnungen 18 identisch ausgebildet.

Das in Fahrtrichtung rechte Achsaufnahmeelement 14 weist zusätzlich ein Spannelement auf. Dieses ist im dargestellten Ausführungsbeispiel derart ausgebildet, dass das Achsaufnahmeelement einen Ansatz 44 aufweist, in dem eine im Wesentlichen in Längsrichtung 20 verlaufende Schraube 46 angeordnet ist. Das dem Schraubenkopf gegenüberliegende vordere Ende der Schraube stößt an eine ebene Anlage 48. Durch Eindrehen der Schraube 46 erfolgt ein Verschieben des Achsaufnahmeelements 14 nach hinten und somit ein Spannen des Riemens oder einer Kette.

Ein entsprechendes Spannelement muss an dem gegenüberliegenden Achsaufnahmeelement 16 nicht unbedingt vorgesehen sein. Nach gespanntem Riemen kann ein Ausrichten des Hinterrades derart erfolgen, dass der Reifen beispielsweise zu den beiden Kettenstreben oder zu den beiden Sattelstreben jeweils denselben Abstand aufweist und somit die Hinterradachse korrekt ausgerichtet ist.

Das Achsaufnahmeelement 16 weist im dargestellten Ausführungsbeispiel eine nach oben weisende Halteeinrichtung 50 auf. Diese umfasst zwei Durchgangsbohrungen und dient zur Fixierung eines nicht dargestellten Bremssattels mit Hilfe zweier weiterer Schrauben, die ebenfalls von der Unterseite durch entsprechende im Achsaufnahmeelement vorgesehene Bohrungen eingesteckt werden und in entsprechende Gewindebohrungen des Bremssattels eingeschraubt werden.

## Patentansprüche

1. Aufnahmeeinrichtung für eine Fahrrad-Hinterradachse, mit zwei jeweils mit einer Kettenstrebe eines Fahrradrahmens verbindbaren Kettenstrebenelementen (10, 12),
zwei jeweils mit einem Kettenstrebenelement (10, 12) verschiebbar verbundenen Achsaufnahmeelementen (14, 16) mit einer Ausnehmung (18) zur Aufnahme einer Hinterradachse und
jeweils mindestens einem Fixierelement (24, 26) zum Fixieren des Achsaufnahmeelements (14, 16) in unterschiedlicher Position an dem zugehörigen Kettenstrebenelement (10, 12),
wobei jedes Fixierelement (24, 26) ein Klemmmittel (26) aufweist, das an einer Unterseite (30) des Achsaufnahmeelements (14, 16) und/oder des Kettenstrebenelements (10, 12) angeordnet ist,
**dadurch gekennzeichnet, dass**
jedes Fixierelement für jedes Klemmmittel (26) jeweils einen Aufnahmeansatz (24) aufweist, mit dem das Kettenstrebenelement (10, 12) oder das Achsaufnahmeelement (14, 16) verbunden ist und die Aufnahmeansätze (24) jeweils in eine Ausnehmung (22) des Achsaufnahmeelements (14, 16) oder des Kettenstrebenelements (10, 12) ragen.

2. Aufnahmeeinrichtung für eine Fahrrad-Hinterradachse nach Anspruch 1 **dadurch gekennzeichnet, dass** das Achsaufnahmeelement (14, 16) oder das Kettenstrebenelement (10, 12) je Klemmmittel (26) eine insbesondere als Längsschlitz ausgebildete Öffnung (28) aufweisen, durch die das Klemmmittel (26) hindurch geführt ist.

3. Aufnahmeeinrichtung für eine Fahrrad-Hinterradachse nach Anspruch 1 oder 2 **dadurch gekennzeichnet, dass** die Ausnehmung (22) in eine Verschieberichtung (20) eine größere Abmessung als der Aufnahmeansatz (24) aufweist.

4. Aufnahmeeinrichtung für eine Fahrrad-Hinterradachse nach einem der Ansprüche 1 bis 3 **dadurch gekennzeichnet, dass** die Ausnehmung (22) zur Führung senkrecht zur Verschieberichtung (20) im Wesentlichen dieselbe Abmessung wie der Aufnahmeansatz (22) aufweist.

5. Aufnahmeeinrichtung für eine Fahrrad-Hinterradachse nach einem der Ansprüche 1 bis 4 **dadurch gekennzeichnet, dass** je Achsaufnahmeelement (14, 16) und je Kettenstrebenelement (10, 12) zwei Fixierelemente (24, 26) vorgesehen sind, die vorzugsweise in Verschieberichtung (20) hintereinander angeordnet sind.

6. Aufnahmeeinrichtung für eine Fahrrad-Hinterradachse nach einem der Ansprüche 1 bis 5 **dadurch gekennzeichnet, dass** eines der beiden Achsaufnahmeelemente (14, 16) eine Halteeinrichtung (50) für einen Bremssattel aufweist.

7. Aufnahmeeinrichtung für eine Fahrrad-Hinterradachse nach einem der Ansprüche 1 bis 6 **dadurch gekennzeichnet, dass** die Kettenstrebenelement (10, 12) jeweils eine Sattelstrebenaufnahme (36, 38) zur Verbindung mit jeweils einer Sattelstrebe aufweisen.

8. Aufnahmeeinrichtung für eine Fahrrad-Hinterradachse nach Anspruch 7 **dadurch gekennzeichnet, dass** eines der beiden Kettenstrebenelemente (10) lösbar mit der Sattelstrebenaufnahme (36) verbunden ist, zur Ausbildung eines Riemenschlitzes (42) zur Montage eines Riemens.

9. Aufnahmeeinrichtung für eine Fahrrad-Hinterradachse nach Anspruch 8, **dadurch gekennzeichnet, dass** das Kettenstrebenelement (10) mit der Sattelstrebenaufnahme (36) über ein Halteelement (39) lösbar verbunden ist.

10. Aufnahmeeinrichtung für eine Fahrrad-Hinterradachse nach Anspruch 9 **dadurch gekennzeichnet, dass** in dem Riemenschlitz (42) ein bei gelöstem Halteelement (39) herausnehmbares Distanzelement (40) vorgesehen ist.

11. Aufnahmeeinrichtung für eine Fahrrad-Hinterradachse nach einem der Ansprüche 1 bis 10 **dadurch gekennzeichnet, dass** an zumindest einem der beiden Achsaufnahmeelemente oder zumindest einer der beiden Kettenstrebenelemente ein Spannelement (44, 46) vorgesehen ist.

## Claims

1. Receiving device for a bicycle rear wheel axle, comprising
two chain stay elements (10, 12), each adapted to be connected to a chain stay of a bicycle frame,
two axle receiving elements (14, 16), each slidably connected to a chain stay element (10, 12) and having a recess (18) for receiving a rear wheel axle and
at least one fixing element (24, 26), respectively, for fixing the axle receiving element (14, 16) in different positions on the associated chain stay element (10, 12),
wherein each fixing element (24, 26) comprises a clamping means (26) arranged on an underside (30) of the axle receiving element (14, 16) and/or the chain stay element (10, 12),
**characterized in that**
each fixing element comprises a respective receiving protrusion (24) for each clamping means (24), with which protrusion the chain stay element (10, 12) or the axle receiving element (14, 16) is connected, and that the receiving protrusions (24) each protrude into a recess (22) of the axle receiving element (14, 16) or the chain stay element (10, 12).

2. Receiving device for a bicycle rear wheel axle of claim 1, **characterized in that**, per clamping means (26), the axle receiving element (14, 16) or the chain stay element (10, 12) comprise an opening (28) which is in particular designed as a longitudinal slot through which the clamping means (26) is guided.

3. Receiving device for a bicycle rear wheel axle of one of claims 1 or 2, **characterized in that** the recess (22) has a larger dimension in a displacement direction (20) than the receiving protrusion (24).

4. Receiving device for a bicycle rear wheel axle of one of claims 1 to 3, **characterized in that** for guiding, the recess (22) has substantially the same dimensions as the receiving protrusion (24) perpendicular to the displacement direction (20).

5. Receiving device for a bicycle rear wheel axle of one of claims 1 to 4, **characterized in that** two fixing elements (24, 26) are provided per axle receiving element (14, 16) and per chain stay element (10, 12), which are preferably arranged one behind the other in the displacement direction (20).

6. Receiving device for a bicycle rear wheel axle of one of claims 1 to 5, **characterized in that** one of the two axle receiving elements (14, 16) comprises a retaining device (50) for a brake caliper.

7. Receiving device for a bicycle rear wheel axle of one of claims 1 to 6, **characterized in that** the chain stay elements (10, 12) each comprise a seat stay mount (36, 38) for connection to a respective seat stay.

8. Receiving device for a bicycle rear wheel axle of claim 7, **characterized in that** one of the two chain stay elements (10) is removably connected to the saddle stay mount (36) to form a belt slot (42) for mounting a belt.

9. Receiving device for a bicycle rear wheel axle of claim 8, **characterized in that** the chain stay element (10) is removably connected to the seat stay mount (36) via a retaining element (38).

10. Receiving device for a bicycle rear wheel axle of claim 9, **characterized in that** a spacer element (40), which can be removed when the retaining element (38) is released, is provided in the belt slot (42).

11. Receiving device for a bicycle rear wheel axle of one of claims 1 to 10, **characterized in that** a tensioning element (44, 46) is provided on at least one of the two axle receiving elements or at least one of the two chain stay elements.

## Revendications

1. Dispositif de logement pour un essieu de roue arrière de bicyclette, avec deux éléments de base de cadre (10, 12) adaptés chacun pour être reliés à une base de cadre d'un cadre de bicyclette,
deux éléments de logement d'essieu (14, 16) reliés chacun de façon coulissante à un élément de base de cadre (10, 12), comportant un évidement (18) pour loger un essieu de roue arrière et
au moins un élément de fixation (24, 26) respectif pour fixer l'élément de logement d'essieu (14, 16) dans une position variable sur l'élément de base de cadre (10, 12) correspondant,
chaque élément de fixation (24, 26) comprenant un moyen de serrage (26) qui est disposé sur une face inférieure (30) de l'élément de logement d'essieu (14, 16) et/ou de l'élément de base de cadre (10, 12),
**caractérisé en ce que**
chaque élément de fixation pour chaque moyen de serrage (26) comprend un talon de logement (24) auquel l'élément de base de cadre (10, 12) ou l'élément de logement d'essieu (14, 16) est relié, et les talons de logement (24) s'étendent chacun dans un évidement (22) de l'élément de logement d'essieu (14, 16) ou de l'élément de base de cadre (10, 12).

2. Dispositif de logement pour un essieu de roue arrière de bicyclette selon la revendication 1, **caractérisé en ce que** l'élément de logement d'essieu (14, 16) ou l'élément de base de cadre (10, 12) comprend, pour chaque moyen de serrage (26), une ouverture (28) formée notamment comme fente longitudinale à travers laquelle le moyen de serrage (26) est passé.

3. Dispositif de logement pour un essieu de roue arrière de bicyclette selon la revendication 1 ou 2, **caractérisé en ce que** l'évidement (22) présente, dans une direction de coulissement (20), une dimension supérieure au talon de logement (24).

4. Dispositif de logement pour un essieu de roue arrière de bicyclette selon l'une des revendications 1 à 3, **caractérisé en ce que**, perpendiculairement à la direction de coulissement (20), l'évidement (22) pour guider présente sensiblement la même dimension que le talon de logement (24).

5. Dispositif de logement pour un essieu de roue arrière de bicyclette selon l'une des revendications 1 à 4, **caractérisé en ce que**, pour chaque élément de logement d'essieu (14, 16) et chaque élément de base de cadre (10, 12), sont prévus deux éléments de fixation (24, 26) qui sont fixés de préférence l'un derrière l'autre dans la direction de coulissement (20).

6. Dispositif de logement pour un essieu de roue arrière de bicyclette selon l'une des revendications 1 à 5, **caractérisé en ce que** l'un des deux éléments de logement d'essieu (14, 16) comprend un dispositif de maintien (50) pour un étrier de frein.

7. Dispositif de logement pour un essieu de roue arrière de bicyclette selon l'une des revendications 1 à 6, **caractérisé en ce que** les éléments de base de cadre (10, 12) comprennent chacun un logement de hauban (36, 38) pour la liaison avec un hauban respectif.

8. Dispositif de logement pour un essieu de roue arrière de bicyclette selon la revendication 7, **caractérisé en ce que** l'un des deux éléments de base de cadre (10) est relié de manière amovible au logement de hauban (36) dans le but de former une fente de courroie (42) pour le montage d'une courroie.

9. Dispositif de logement pour un essieu de roue arrière de bicyclette selon la revendication 8, **caractérisé en ce que** l'élément de base de cadre (10) est relié de manière amovible au logement de hauban (36) au moyen d'un élément de maintien (39).

10. Dispositif de logement pour un essieu de roue arrière de bicyclette selon la revendication 9, **caractérisé en ce que**, dans la fente de courroie (42), il est prévu un élément d'espacement (40) retirable lorsque l'élément de maintien (39) est déserré.

11. Dispositif de logement pour un essieu de roue arrière de bicyclette selon l'une des revendications 1 à 10, **caractérisé en ce qu'**un élément de tension (44, 46) est prévu à au moins un des deux éléments de logement d'essieu ou à au moins un des deux éléments de base de cadre.
